# EUROPÄISCHE PATENTANMELDUNG

(11) **EP 2 028 051 A1**
(43) Veröffentlichungstag der Anmeldung: **25.02.2009**
(21) Anmeldenummer: 08013318.4
(22) Anmeldetag: 24.07.2008
(51) Int. Cl.: B60R 5/04

(54) **Laderaum für ein Kraftfahrzeug und Ladeboden hierfür**

(30) Priorität: 20.08.2007 DE 102007040374; 14.09.2007 DE 102007045603
(71) Anmelder: BOS GmbH & Co. KG, 73760 Ostfildern (DE)
(72) Erfinder: Bohlke, Hartmut, 42369 Wuppertal (DE); Göbbels, Andreas, 51515 Kürten (DE); Salweski, Jürgen, 40599 Düsseldorf (DE); Sitzler, Wolfgang, 42111 Wuppertal (DE)
(74) Vertreter: Patentanwälte Ruff, Wilhelm, Beier, Dauster & Partner

(57) **Zusammenfassung**

Ein Laderaum für ein Kraftfahrzeug mit einem längs einer laderaumfesten Bodenfläche verschiebbaren Ladeboden, der einen Griffbereich zum manuellen Verschieben des Ladebodens umfasst, wobei die laderaumfeste Bodenfläche an wenigstens einem Seitenrand eine Randkante aufweist, an der der Ladeboden bei einer Verschiebung anschlagen kann, ist bekannt.

Erfindungsgemäß umfasst der Griffbereich des Ladebodens an einem der Randkante der laderaumfesten Bodenfläche zugewandten Randbereich eine Randaussparung, deren Tiefe wenigstens der Dicke wenigstens eines Fingers einer Hand einer Bedienperson entspricht.

Einsatz für Kombi-Personenkraftwagen.

## Beschreibung

Die Erfindung betrifft einen Laderaum für ein Kraftfahrzeug mit einem längs einer laderaumfesten Bodenfläche verschiebbaren Ladeboden, der einen Griffbereich zum manuellen Verschieben des Ladebodens umfasst, wobei die laderaumfeste Bodenfläche an wenigstens einem Seitenrand eine Randkante aufweist, an der der Ladeboden bei einer Verschiebung anschlagen kann, sowie einen Ladeboden für einen derartigen Laderaum.

Ein derartiger Laderaum für einen Kombi-Personenkraftwagen ist allgemein bekannt. Der Laderaum weist im Bereich einer Bodenfläche einen verschiebbaren Ladeboden auf. Der verschiebbare Ladeboden ist in Führungsschienen geführt, die versenkt in der Bodenfläche des Laderaums angeordnet sind.

Ein mit einer Heckklappe versehener Laderaum eines Personenkraftwagens weist häufig heckseitig eine Ladekante auf, die die laderaumfeste Bodenfläche des Laderaums nach hinten begrenzt.

Aufgabe der Erfindung ist es, einen Laderaum der eingangs genannten Art zu schaffen, der den verletzungsfreien Einsatz eines verschiebbaren Ladebodens auch bei durch eine Randkante, insbesondere eine Ladekante, begrenzter Bodenfläche des Laderaums ermöglicht.

Diese Aufgabe wird dadurch gelöst, dass dem Griffbereich des Ladebodens an einem der Randkante der laderaumfesten Bodenfläche zugewandten Randbereich Stützmittel zugeordnet sind, die in einer zu der Randkante verschobenen Endposition des Ladebodens den Randbereich in einem Abstand zu der Randkante halten, der - zu einer Mitte des Ladebodens hin gesehen - so groß bemessen ist, dass er wenigstens der Dicke eines Fingers einer Hand einer Bedienperson entspricht und insbesondere wenigstens 2 cm beträgt. Als Stützmittel können Endanschläge, Abstandshalter oder entsprechende Ausformungen an der Randkante der laderaumfesten Bodenfläche oder am Randbereich des Ladebodens vorgesehen sein. Durch die erfindungsgemäße Lösung wird das Einklemmen eines Fingers oder einer Hand der Bedienperson beim Verschieben des Ladebodens in seine zu der Randkante benachbarte Endposition vermieden.

In Ausgestaltung der Erfindung umfassen die Stützmittel eine Randaussparung an dem der Randkante der laderaumfesten Bodenfläche zugewandten Randbereich des Ladebodens. Durch diese Ausgestaltung kann der Ladeboden zur Randkante des Laderaums von einer entsprechenden Bedienperson gezogen werden, ohne dass die Bedienperson sich die Hand oder einen oder mehrere Finger einklemmt, wenn der Ladeboden die Randkante des Laderaums erreicht. Die Randaussparung ist so groß gewählt, dass auch bei einem Anschlag des Ladebodens mit seinem entsprechenden Randbereich an der Randkante des Laderaums für die Griffhand der Bedienperson ausreichend Raum verbleibt, um ein Einklemmen und demzufolge eine Verletzung der Hand zu vermeiden. In vorteilhafter Weise ist die Randaussparung des Ladebodens lediglich in einem mittleren Bereich des Ladebodens vorgesehen, falls auch der Griffbereich sich etwa mittig am Ladeboden befindet. Die zu der Randaussparung benachbarten Randbereichabschnitte des Ladebodens dienen als Anschlagflächen an der Randkante des Laderaums. Vorzugsweise ist die Randkante des Laderaums bzw. der laderaumfesten Bodenfläche eine heckseitige Ladekante. In einem mittleren Bereich der Ladekante ist vorzugsweise ein Schlossteil eines Heckschlosses für die Heckklappe vorgesehen. Unter dem Begriff der Randkante der laderaumfesten Bodenfläche fällt auch eine randseitige Erhebung über das Niveau der laderaumfesten Bodenfläche, die lediglich über einen kleinen Teil der Länge eines entsprechenden Seitenrands der Bodenfläche vorgesehen ist. Eine entsprechende praktische Ausführung kann durch eine heckseitige Schlossblende gebildet sein, die sich lediglich in einem mittleren Bereich von der heckseitigen Ladekante aus erhebt. Als heckseitige Endanschläge für die Begrenzung der Verschiebbarkeit des Ladebodens sind bei dieser Ausführung entsprechende Anschlagelemente in den bodenseitigen Führungsprofilen vorgesehen, in denen der Ladeboden verschiebbar geführt ist. Auch bei dieser Ausführung ist der Ladeboden mit einer Randaussparung versehen, die bei entsprechend erreichter Endanschlagposition des Ladebodens noch einen ausreichenden Abstand zu dem entsprechenden Hindernis, d.h. zu der Schlossblende bzw. der Randkante der laderaumfesten Bodenfläche, von der Dicke wenigstens eines Fingers und insbesondere von wenigstens zwei Zentimeter einhält. Die Tiefe, d.h. der Abstand von wenigstens zwei Zentimeter ist gewählt worden, da der hierdurch entsprechend verbleibende Spalt bzw. Freiraum so groß ist, dass er regelmäßig die Dicke eines Daumens der Bedienperson übersteigt. Eine längs des Randbereichs des Ladebodens erstreckte Breite der Randaussparung ist vorzugsweise wenigstens so groß gemessen, dass wenigstens zwei bis drei Finger einer Hand nebeneinander in der Randaussparung Platz finden, ohne bei einem entsprechenden Endanschlag des Ladebodens eingeklemmt zu werden.

In weiterer Ausgestaltung der Erfindung weist der Griffbereich in Abstand zu der Randaussparung zur Mitte des Ladebodens hin versetzt eine Durchgriffsöffnung und/oder ein Griffelement auf. Dadurch wird ein Ergreifen des Ladebodens und ein manuelles Verschieben durch eine Bedienperson erleichtert. Die Durchgriffsöffnung und/oder das Griffelement bilden gemeinsam mit der Randaussparung den Griffbereich, damit die Bedienperson in der Ebene des Ladebodens ein Ergreifen vornehmen kann.

Weitere Vorteile und Merkmale der Erfindung ergeben sich aus den Ansprüchen sowie aus der nachfolgenden Beschreibung eine bevorzugten Ausführungsbeispiels der Erfindung, das anhand der Zeichnungen dargestellt ist.
- Fig. 1: zeigt eine Ausführungsform eines erfindungsgemäßen Laderaums mit einem in einer Zwischenposition befindlichen, verschiebbaren Ladeboden,
- Fig. 2: den Laderaum nach Fig. 1 mit einem in eine heckseitige Endposition verschobenen Ladeboden,
- Fig. 3: schematisch eine Schnittdarstellung entlang der Schnittebene III - III in Fig. 2,
- Fig. 4: eine weitere Ausführungsform eines erfindungsgemäßen Laderaumes ähnlich den Figuren 1 und 2,
- Fig. 5: eine weitere Ausführungsform eines erfindungsgemäßen Laderaumes ähnlich Fig. 4,

- Fig. 6: eine weitere Ausführungsform eines erfindungsgemäßen Laderaumes ähnlich Fig. 5, und
- Fig. 7: eine letzte Ausführungsform eines erfindungsgemäßen Laderaumes ähnlich den zuvor beschriebenen Ausführungsformen.

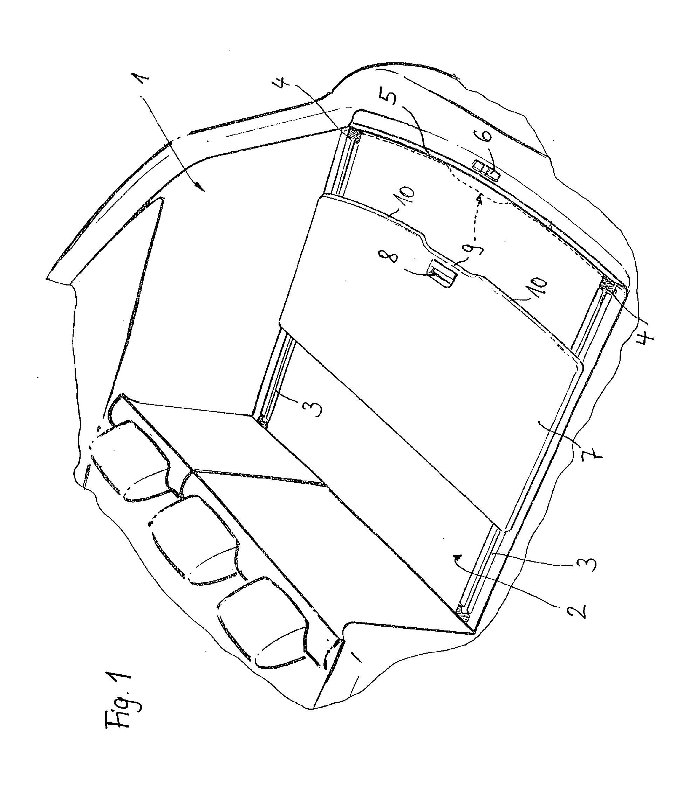

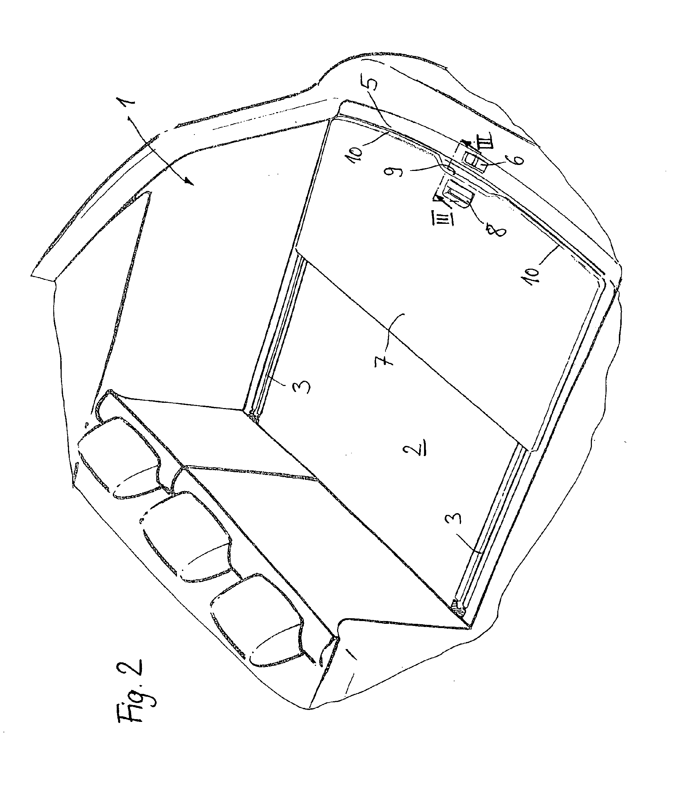

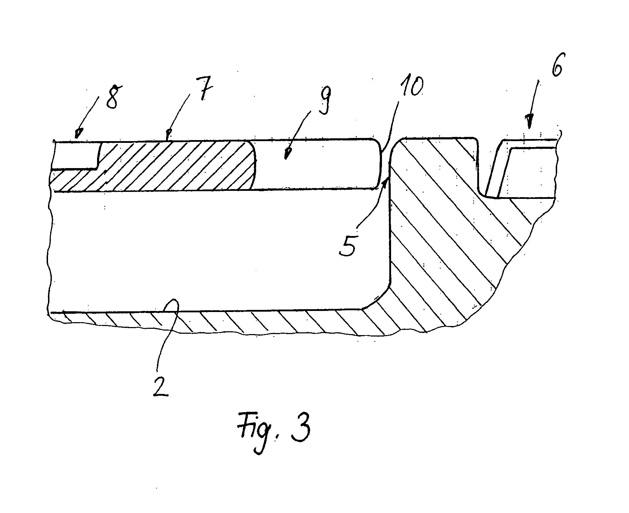

Ein Kraftfahrzeug in Form eines Kombi-Personenkraftwagens gemäß den Fig. 1 und 2 weist heckseitig einen Laderaum 1 auf, der durch eine nicht dargestellte, schwenkbare Heckklappe verschließbar ist. Der Ladraum 1 wird - in normaler Fahrtrichtung gesehen - nach vorne durch eine Fondsitzbank begrenzt. Zu den gegenüberliegenden Fahrzeugseiten hin wird der Laderaum 1 durch entsprechende Seitenwandungen begrenzt. Heckseitig dient die Heckklappe als Begrenzung. Eine Bodenfläche 2 des Laderaums 1 ist die fahrzeugfeste Begrenzung des Laderaums 1 nach unten. Die Bodenfläche 2 erstreckt sich über die gesamte Länge des Laderaums 1. Heckseitig schließt die Bodenfläche 2 mit einer Randkante in Form einer Ladekante 5 ab, die gegenüber der zumindest weitgehend horizontalen, ebenen Bodenfläche 2 rechtwinklig nach oben abragt. Die Ladekante 5 erstreckt sich über eine gesamte Breite des Laderaums 1 und damit der Bodenfläche 2. Bündig in der Bodenfläche 2 versenkt angeordnet sind zwei Führungsschienen 3, die auf gegenüberliegenden Längsseiten der Bodenfläche 2 parallel zueinander über die gesamte Länge der Bodenfläche 2 verlaufen. Die Führungsschienen 3 sind in Fahrzeuglängsrichtung ausgerichtet. In den Führungsschienen ist mittels Roll- oder Gleitelementen ein Ladeboden 7 längsverschiebbar geführt, der eine sich über nahezu die gesamte Breite des Laderaums erstreckende, formstabile Bodenplatte umfasst. Der Ladeboden 7 ist mittels seiner Führungs- oder Gleitelemente in einer parallelen Ebene knapp über der Bodenfläche 2 angeordnet, wie den Fig. 1 bis 3 entnehmbar ist. Eine Oberfläche des Ladebodens 7 schließt etwa bündig mit einem Höhenniveau einer Oberkante der Ladekante 5 ab, wie Fig. 3 entnehmbar ist.

Der Ladeboden 7 weist heckseitig einen Randbereich 10 auf, der sich über die Breite des Ladebodens 7 erstreckt und zumindest weitgehend parallel zu der heckseitigen und fahrzeugfesten Ladekante 5 verläuft. In einer heckseitigen Endposition des Ladebodens 7 (Fig. 2 und 3 sowie gestrichelte Darstellung in Fig. 1) ist der Randbereich 10 des Ladebodens 7 unmittelbar benachbart zur Ladekante 5 angeordnet. Je nachdem, wie Endanschläge 4 der Führungsschienen 3 relativ zu den nicht dargestellten Roll- oder Gleitelementen an der Unterseite des Ladebodens 7 ausgerichtet sind, schlägt der Randbereich 10 an der Ladekante 5 an, oder es verbleibt in der heckseitigen Endposition des Ladebodens 7 ein minimaler Abstand von wenigen Millimetern.

Die Ladekante 5 wird durch eine über die gesamte Breite eines bodenseitigen Abschnitts der Heckaussparung für die Heckklappe verlaufenden Heckblende gebildet, in die ein Schlossteilbereich 6 für ein Heckschloss der Heckklappe eingebettet ist, wie anhand der Fig. 1 bis 3 erkennbar ist.

Der Ladeboden 7 weist in einem - auf eine normale Fahrtrichtung des Kraftfahrzeugs bezogen - rückseitigen und mittleren Abschnitt einen Griffbereich 8, 9 auf, der das manuelle Ergreifen und Verschieben des Ladebodens 7 ermöglicht. Der Griffbereich umfasst eine Eingriffsöffnung 8, die entweder als einfache Aussparung in der Platte des Ladebodens 7 ausgestaltet ist, oder durch ein Einsatzelement aus Kunststoff gebildet ist, das in die Aussparung eingesetzt ist. In beiden Fällen wird die Eingriffsöffnung 8 geschaffen, die so gestaltet ist, dass wenigstens vier Finger einer Hand, vorzugsweise Zeigefinger, Mittelfinger, Ringfinger und kleiner Finger, hineingreifen können. Der Griffbereich umfasst außerdem eine Randaussparung 9, die als Einbuchtung in dem Randbereich 10 des Ladebodens 7 gestaltet ist. In dieser Randaussparung 9 liegt dann der Daumen der Bedienperson, wenn die übrigen Finger - wie ausgeführt - in die Eingriffsöffnung 8 eingreifen. Die Randaussparung 9 ist ebenfalls in einem mittleren Bereich des Ladebodens 7 vorgesehen. Die Randaussparung 9 ist etwas breiter ausgeführt als eine - in Fahrzeugquerrichtung gesehene - Breite der Eingriffsöffnung 8. Beim dargestellten Ausführungsbeispiel ist die Breite der Randaussparung 9 etwa doppelt so breit wie die Breite der Eingriffsöffnung 8. Eine Tiefe der Randaussparung 9 - d.h. ein zur Mitte des Ladebodens 7 hin gerichteter Abstand einer vertikalen Randkante der Randaussparung 9 zu dem Randbereich 10 des Ladebodens 7 - beträgt wenigstens ein bis zwei Zentimeter. Die Randaussparung 9 dient dazu, einen Aufnahmeraum oder Aufnahmespalt für einen Daumen oder für andere Finger einer Hand der Bedienperson zu schaffen, die den Ladeboden 7 ergreift und verschiebt.

Falls eine Bedienperson mit vier Fingern in die Eingriffsöffnung 8 eingreift und mit ihrem Daumen die Randaussparung 9 umgreift, kann sie den Ladeboden 7 bis zum heckseitigen Anschlag und damit bis zu der fahrzeugfesten Ladekante 5 verschieben, ohne dass der Daumen zwischen dem Ladeboden 7 und der Ladekante 5 eingeklemmt wird. Denn in der heckseitigen Endposition des Ladebodens 7 bleibt, wie insbesondere anhand der Fig. 2 und 3 erkennbar ist, im Bereich der Randaussparung 9 ein Spaltabschnitt oder Zwischenraum, der so groß ist, dass der Daumen nicht zwischen der Randkante der Randaussparung 9 des Ladeboden 7 und der Ladekante 5 eingeklemmt wird.

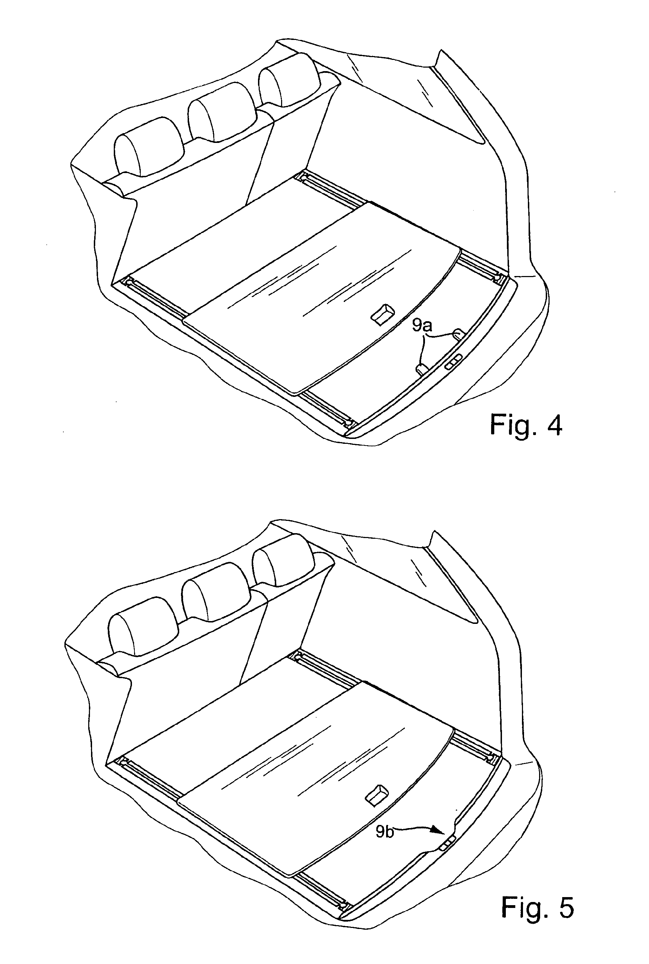

Die Ausführungsformen nach den Figuren 4 bis 7 entsprechen vom grundsätzlichen Aufbau her der zuvor beschriebenen Ausführungsform nach den Figuren 1 bis 3. Zur Vermeidung von Wiederholungen wird daher auf die Offenbarung zu der Ausführungsform nach den Figuren 1 bis 3 verwiesen. Nachfolgend wird lediglich noch auf Unterschiede der Ausführungsformen nach den Figuren 4 bis 7 verwiesen. Aus Übersichtlichkeitsgründen wurden auch die Bezugszeichen für die übrigen Teile und Abschnitte des Laderaumes weggelassen, da diese insoweit den Bezugszeichen nach den Figuren 1 bis 3 entsprechen.

Bei der Ausführungsform nach Fig. 4 werden die Stützmittel nicht durch eine Randaussparung 9 am Ladeboden 7 gebildet, wie dies bei der Ausführungsform nach den Figuren 1 bis 3 der Fall ist. Vielmehr sind dort als Stützmittel 9a zwei Anschlagpuffer 9a vorgesehen, die vorzugsweise eine gewisse elastische Nachgiebigkeit aufweisen, um harte Anschlaggeräusche zu vermeiden. Die beiden Anschlagpuffer 9a sind etwa auf Höhe des Griffbereiches des Ladebodens an der Randkante des heckseitigen Karosserieabschnittes vorgesehen. Die Anschlagpuffer 9a ragen etwa parallel zu einer Bodenfläche des Laderaumes zum verschiebbaren Ladeboden hin ab, so dass bei einer Verschiebung des Ladebodens nach hinten sein heckseitiger Randbereich an diesen Anschlagpuffern 9a anschlägt. Die Anschlagpuffer sind spiegelsymmetrisch zu einer vertikalen Mittellängsebene des Laderaumes in einem Abstand zueinander angeordnet, der etwas größer ist als die Quererstreckung des Griffbereiches des Ladebodens. Die Höhe der Anschlagpuffer, d.h. die Erstreckung zum Randbereich des verschiebbaren Ladebodens hin, beträgt vorzugsweise wenigstens 2 cm, um den gewünschten Einklemmschutz zu erzielen.

Bei der Ausführungsform nach Fig. 5 ist eine Randeinbuchtung 9b im Bereich der fahrzeugfesten Randkante vorgesehen, die spiegelsymmetrisch zu der am Randbereich des verschiebbaren Ladebodens vorgesehenen Randaussparung 9 der Ausführungsform nach den Figuren 1 bis 3 angeordnet ist. Dadurch bilden die neben dieser Randeinbuchtung befindlichen Bereiche 9b' Stützmittel für den Randbereich des Ladebodens, die ein Einklemmen verhindern. Denn die Hand einer Bedienperson kann beim Verschieben des Ladebodens in die Randeinbuchtung 9b eintauchen, sobald der Randbereich des Ladebodens an den die Randeinbuchtung 9b seitlich flankierenden Bereichen 9b' der fahrzeugfesten Randkante anschlägt. Bei dieser Ausführungsform kann der Ladeboden an der fahrzeugfesten Randkante über den Großteil seiner Kante anschlagen, da auf Höhe des Griffbereiches die Randeinbuchtung 9b vorgesehen ist, die in analoger Weise einen Einklemmschutz bietet, wie dies die Anschlagpuffer 9a nach Fig. 4 oder die Randaussparung 9 nach Fig. 1 tun.

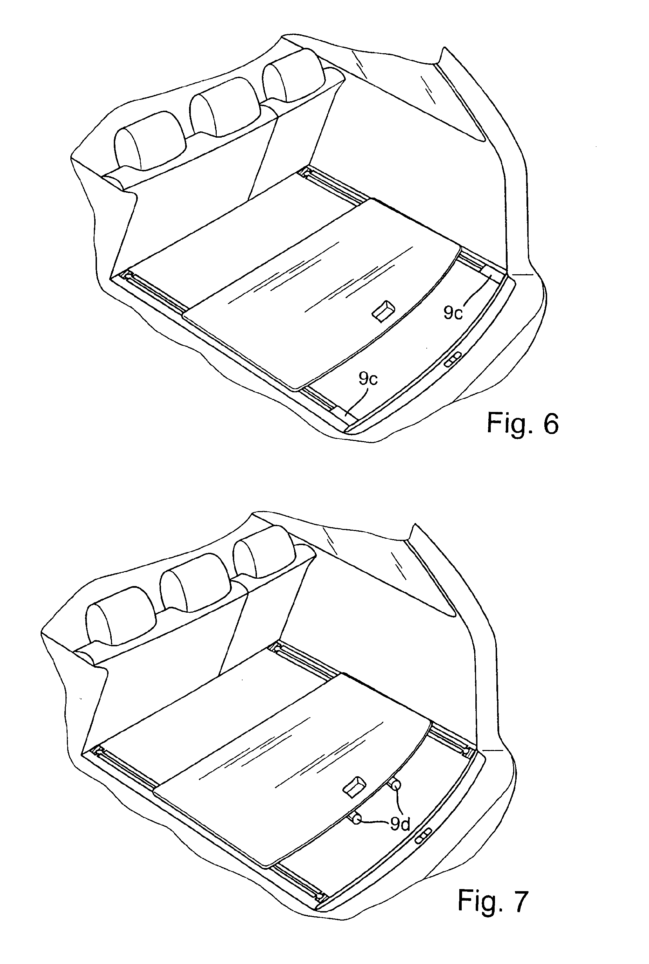

Bei der Ausführungsform nach Fig. 6 sind ebenfalls Anschlagpuffer 9c als Stützmittel vorgesehen, die allerdings nicht unmittelbar den Griffbereich des Ladebodens seitlich flankieren, sondern vielmehr im Bereich der fahrzeugfesten Führungsschienen in der Bodenfläche des Laderaumes angeordnet sind. Diese Anschlagpuffer 9c bilden die Endanschläge für den heckseitigen Randbereich des verschiebbaren Ladebodens und ragen vom Niveau der Führungsschienen aus nach oben ab. Dadurch läuft der Randbereich des Ladebodens beim Verschieben nach hinten zwangsläufig gegen diese Anschlagpuffer 9c an.

Bei der Ausführungsform nach Fig. 7 sind die Anschlagpuffer 9d nicht fahrzeugfest, sondern vielmehr ladebodenfest angeordnet. Sie sind entsprechend spiegelverkehrt zu den Anschlagpuffern 9a der Ausführungsform nach Fig. 4 an dem heckseitigen Randbereich des verschiebbaren Ladebodens angeordnet und ragen zu der fahrzeugfesten, heckseitigen Randkante der Bodenfläche des Ladebodens hin ab. Auch die Anschlagpuffer 9d flankieren den Griffbereich seitlich und spiegelsymmetrisch zu einer vertikalen Mittellängsebene des Laderaumes.

## Patentansprüche

1. Laderaum für ein Kraftfahrzeug mit einem längs einer laderaumfesten Bodenfläche (2) verschiebbaren Ladeboden (7), der einen Griffbereich (8) zum manuellen Verschieben des Ladebodens (7) umfasst, wobei die laderaumfeste Bodenfläche (2) an wenigstens einem Seitenrand eine Randkante (5) aufweist, an der der Ladeboden unmittelbar benachbart positionierbar ist, **dadurch gekennzeichnet, dass** dem Griffbereich (8) des Ladebodens (7) an einem der Randkante (5) der laderaumfesten Bodenfläche (2) zugewandten Randbereich (10) Stützmittel (9, 9a, 9b, 9c, 9d) zugeordnet sind, die in einer zu der Randkante (5) verschobenen Endposition des Ladebodens (7) den Randbereich (10) in einem Abstand zu der Randkante (5) halten, der - zu einer Mitte des Ladebodens (7) hin gesehen - so groß bemessen ist, dass er wenigstens der Dicke eines Fingers einer Hand einer Bedienperson entspricht und insbesondere wenigstens 2 cm beträgt.

2. Laderaum nach Anspruch 1, **dadurch gekennzeichnet, dass** die Stützmittel eine Randaussparung (9) umfassen, die an einem der Randkante (5) der laderaumfesten Bodenfläche (2) zugewandten Randbereich (10) des Ladebodens (7) angeordnet ist.

3. Laderaum nach Anspruch 1 oder 2, **dadurch gekennzeichnet, dass** der Griffbereich (8) in Abstand zu dem Randbereich (10) des Ladebodens (7) eine Eingriffsöffnung und/oder ein Griffelement aufweist.

4. Ladeboden für einen Laderaum nach einem der vorhergehenden Ansprüche, der mit wenigstens einem gemäß Anspruch 1 beschriebenen Stützmittel (9, 9a, 9b, 9c, 9d) versehen ist.
